# EUROPEAN PATENT APPLICATION

(11) **EP 4 113 666 A1**
(43) Date of publication of application: **04.01.2023**
(21) Application number: 21760594.8
(22) Date of filing: 16.02.2021
(51) Int. Cl.: H01M 4/525, H01G 11/06, H01G 11/18, H01G 11/30, H01G 11/38, H01M 4/131, H01M 4/36, H01M 4/505

(54) **COMPOSITE PARTICLE FOR ELECTROCHEMICAL ELEMENT, PRODUCTION METHOD THEREFOR, ELECTRODE FOR ELECTROCHEMICAL ELEMENT, AND ELECTROCHEMICAL ELEMENT**

(30) Priority: 28.02.2020 JP 2020034331
(71) Applicant: Zeon Corporation, Tokyo 100-8246 (JP)
(72) Inventor: AKITA, Yasuhiro, Tokyo 100-8246 (JP); ISSHIKI, Yasuhiro, Tokyo 100-8246 (JP)
(74) Representative: Hansen, Norbert
(86) International application number: PCT/JP2021/005745
(87) International publication number: WO 2021/172105

(57) **Abstract**

A composite particle for an electrochemical device is provided which suppresses an increase in the initial resistance and heat generation in case of internal short circuit of an electrochemical device. This composite particle contains an electrode active material, a conductive material, a binder, and 0.1 parts by mass or more and 5 parts by mass or less of a thermally decomposable foaming agent per 100 parts by mass of the composite particle. When a cross section of the composite particle perpendicular to the long axis of the composite particle, and including the midpoint of the long axis is subjected to a map analysis using an electron beam microanalyzer, the value of the ratio of the integrated values of the detection intensities of carbon atoms contained outside and inside the range of the circle the center of which is coincides with the midpoint of the long axis and the diameter of which is one half of the length of the long axis is 4 or more and 15 or less.

## Description

### TECHNICAL FIELD

The present disclosure relates to a composite particle for an electrochemical device and a method of producing the same, and an electrode for an electrochemical device and an electrochemical device.

### BACKGROUND

Electrochemical devices such as lithium ion secondary batteries, electric double-layer capacitors, and lithium ion capacitors have characteristics such as compact size, light weight, high energy-density, and the ability to be repeatedly charged and discharged, and are used in a wide range of applications.

Conventionally, efforts for improving members of electrochemical devices have been made for suppressing heat generation in case of internal short circuit in the electrochemical devices. For example, PTL 1 proposes an electrode for an electrochemical device including a conductive adhesive layer containing a foaming agent having a foaming temperature of 140 °C or higher between a current collector and an electrode mixed material layer, and an electrochemical device including such a electrode.

### CITATION LIST

### Patent Literature

WO 2018/155281 A

### SUMMARY

### (Technical Problem)

However, there is still room for improvement in the above-mentioned conventional electrochemical device with regard to suppression of an increase in the initial resistance as well as suppression of heat generation in case of internal short circuit in the electrochemical device.

It would therefore be helpful to provide a new technology relating to an electrochemical device in which an increase in the initial resistance is suppressed and which is excellent in suppression of heat generation in case of internal short circuit.

### (Solution to Problem)

The present inventors have conducted diligent investigation for solving the aforementioned problem. The present inventors then have found that usage of composite particles formed from aggregate of an electrode active material, a conductive material, a thermally decomposable foaming agent, and a binder, wherein the conductive material, the thermally decomposable foaming agent, and the binder are unevenly distributed in the composite particles enables production of an electrochemical device in which an increase in the initial resistance is suppressed, and which is excellent in suppression of heat generation in case of internal short circuit, thereby completing the present disclosure.

That is, the present disclosure is directed to advantageously solving the above-mentioned problem, and a composite particle for an electrochemical device of the present disclosure (hereinafter, also simply referred to as "composite particles") is a composite particle for an electrochemical device, the composite particle comprising an electrode active material, a conductive material, a thermally decomposable foaming agent, and a binder, the thermally decomposable foaming agent being contained in an amount of 0.1 parts by mass or more and 5 parts by mass or less per 100 parts by mass of the composite particle for an electrochemical device, when a cross section of the composite particle for an electrochemical device perpendicular to a long axis of the composite particle for an electrochemical device, and including a midpoint of the long axis is subjected to a map analysis using an electron beam microanalyzer (EPMA), a value of a ratio (S_{A}/S_{B}) of an integrated value (S_{A}) of a detection intensity of carbon atoms contained outside a range of a circle a center of which is coincides with the midpoint of the long axis and a diameter of which is one half of a length of the long axis, to an integrated value (S_{B}) of a detection intensity of carbon atoms contained within the range of the circle, is 4 or more and 15 or less (hereinafter, the value of this ratio is also referred to as "the value of the migration ratio in the composite particle"). As described above, when the composite particle including the electrode active material, the conductive material, the thermally decomposable foaming agent, and the binder, the thermally decomposable foaming agent being contained in the certain amount, and having the value of the migration ratio in the composite particle within the above range is used, the conductive material is made to be unevenly distributed on the surface side of the composite particle, so that contacts between the conductive material increase, leading to formation of reliable conductive paths inside the composite particle. Further, in case of application of heat which can induce foaming of the thermally decomposable foaming agent to the composite particle, the thermally decomposable foaming agent foams, which leads to effective blocking of conductive paths inside the composite particle due to the uneven distribution of the thermally decomposable foaming agent on the surface side of the composite particle. Accordingly, usage of the composite particles of the present disclosure enables production of an electrochemical device in which an increase in the initial resistance is suppressed and which is excellent in suppression of heat generation in case of internal short circuit.

Here, in the present disclosure, the "long axis" refers to the diameter of the composite particle when the interval between two parallel lines sandwiching the composite particle in a two-dimensional projection image of the composite particle is maximized.

Further, in the composite particle for an electrochemical device of the present disclosure, preferably, a volume average particle diameter of the composite particle for an electrochemical device is 30 µm or more and 150 µm or less. When the volume average particle diameter of the composite particle is equal to or larger than the above lower limit, the composite particle can stably maintain its shape. Further, when the volume average particle diameter of the composite particle is equal to or lower than the above upper limit, it is possible to suppress an increase in the internal resistance of an electrode mixed material layer composed of the composite particles.

In this disclosure, "volume average particle diameter" refers to a particle diameter at which, in a particle size distribution (volume basis) measured by laser diffraction, cumulative volume calculated from a small diameter end of the distribution reaches 50%.

Further, in the composite particle for an electrochemical device of the present disclosure, preferably, a thermal decomposition starting temperature of the thermally decomposable foaming agent is 200 °C or higher and 500 °C or lower. When the thermal decomposition starting temperature of the thermally decomposable foaming agent is equal to or higher than the above lower limit, it is possible to prevent the thermally decomposable foaming agent from being inadvertently foamed in production steps of the composite particles of the present disclosure. Further, when the thermal decomposition starting temperature of the thermally decomposable foaming agent is equal to or lower than the above upper limit, the thermally decomposable foaming agent appropriately foams and conductive paths inside the composite particle are effectively blocked if the temperature of an electrochemical device produced by using the composite particles of the present disclosure becomes excessively raised, so that heat generation in case of internal short circuit in the electrochemical device can be effectively suppressed.

Note that, in this specification, the "thermal decomposition starting temperature of the thermally decomposable foaming agent" can be measured by a thermogravimetric analyzer.

Further, in the composite particle for an electrochemical device of the present disclosure, preferably, the thermally decomposable foaming agent has a core-shell structure having a shell made of a surfactant. When the thermally decomposable foaming agent having a core-shell structure having a shell made of a surfactant is used, it is possible to further reduce the internal resistance of an electrochemical device, as well as further effectively suppressing heat generation in case of internal short circuit in the electrochemical device.

Further, in the composite particle for an electrochemical device of the present disclosure, preferably, the conductive material comprises carbon nanotubes. When the conductive material containing carbon nanotubes is used, the initial resistance of the electrochemical device can be effectively reduced.

Further, the present disclosure is directed to advantageously solving the above problem, and a method of producing composite particle for an electrochemical device according to the present disclosure is a method of producing any one of the composite particles for an electrochemical device described above, the method comprising the steps of: preparing a slurry composition for a composite particle by dispersing at least an electrode active material, a conductive material, a thermally decomposable foaming agent, and a binder into a solvent; and granulating the slurry composition for a composite particle, the slurry composition for a composite particle having a viscosity of 500 mPa·s or more and 1500 mPa·s or less. According to such a production method, it is possible to efficiently produce a composite particle in which the conductive material, the thermally decomposable foaming agent, and the binder are unevenly distributed on the surface side of the composite particle in the composite particle.

Note that the viscosity of the slurry composition for a composite particle can be measured by the method described in Examples of the present specification.

Further, in the method of producing the composite particle for an electrochemical device of the present disclosure, preferably, the granulation is achieved by spray drying. When the granulation is achieved by spray drying, the composite particle of the present disclosure can be more efficiently produced.

Moreover, the present disclosure is directed to advantageously solving the above-mentioned problem, and an electrode for an electrochemical device of the present disclosure is an electrode for an electrochemical device comprising an electrode mixed material layer on a current collector, the electrode mixed material layer being an aggregate of any one of above-described composite particles for an electrochemical device. Usage of the electrode for an electrochemical device having the electrode mixed material layer composed of the above-mentioned composite particles enables production of an electrochemical device in which an increase in the initial resistance is suppressed and which is excellent in suppression of heat generation in case of internal short circuit.

Here, in the electrode for an electrochemical device of the present disclosure, preferably, an amount of the composite particles for an electrochemical device per unit area of the current collector is 25 mg/cm² or more and 80 mg/cm² or less, and an upper portion of the electrode mixed material layer and a bottom portion of the electrode mixed material layer yielded by cutting the electrode mixed material layer at a center thereof in a thickness direction are subjected to a map analysis using an electron beam microanalyzer (EPMA), a ratio (S1:S2) of an integrated value (S1) of a detection intensity of carbon atoms contained in the upper portion of the electrode mixed material layer, to an integrated value (S2) of a detection intensity of carbon atoms contained in the bottom portion of the electrode mixed material layer, is 60:40 to 40:60. By using such an electrode for an electrochemical device, heat generation in case of internal short circuit in the electrochemical device can be effectively suppressed.

Furthermore, the present disclosure is directed to advantageously solving the above-mentioned problem, and an electrochemical device of the present disclosure is an electrochemical device comprising the electrode for an electrochemical device set forth above. In the electrochemical device including the electrode for an electrochemical device described above, heat generation in case of internal short circuit is suppressed, and the electrochemical device is excellent in suppression of an increase in the initial resistance.

### (Advantageous Effect)

According to the present disclosure, it is possible to provide composite particle for an electrochemical device, a production method of the same, and an electrode for an electrochemical device, which can contribute to suppression of an increase in the initial resistance of the electrochemical device and suppression of heat generation in case of internal short circuit in the electrochemical device.

In addition, according to the present disclosure, it is possible to provide an electrochemical device in which the initial resistance is suppressed and which is excellent in suppression of heat generation in case of internal short circuit.

### BRIEF DESCRIPTION OF THE DRAWINGS

In the accompanying drawings:
FIG. 1A is a diagram for describing one example of a composite particle for an electrochemical device of the present disclosure, and is a schematic diagram schematically illustrating the composite particle for an electrochemical device of the present disclosure;
FIG. 1B is a cross-sectional view taken along line A-A in FIG. 1A;
FIG. 2 is a cross-sectional view schematically illustrating an electrode for an electrochemical device for describing one example of an electrode for an electrochemical device of the present disclosure; and
FIG. 3 is another cross-sectional view schematically illustrating an electrode for an electrochemical device for describing one example of an electrode for an electrochemical device according to the present disclosure.

### DETAILED DESCRIPTION

A composite particle for an electrochemical device of the present disclosure is for use in an electrochemical device such as a lithium ion secondary battery. Herein, the composite particle for an electrochemical device of the present disclosure can be efficiently produced by a method of producing a composite particle for an electrochemical device of the present disclosure.

Furthermore, an electrode for an electrochemical device of the present disclosure comprises an electrode mixed material layer formed by using the composite particles for an electrochemical device of the present disclosure.

A electrochemical device of the present disclosure comprises the electrode for an electrochemical device of the present disclosure.

Hereinafter, a composite particle for an electrochemical device and a method of producing the same, and an electrode for an electrochemical device, and an electrochemical device of the present disclosure will be described in this order with reference to the drawings. Note that components denoted by the same reference numerals correspond to the same components throughout the following drawings.

### (Composite particle for electrochemical device)

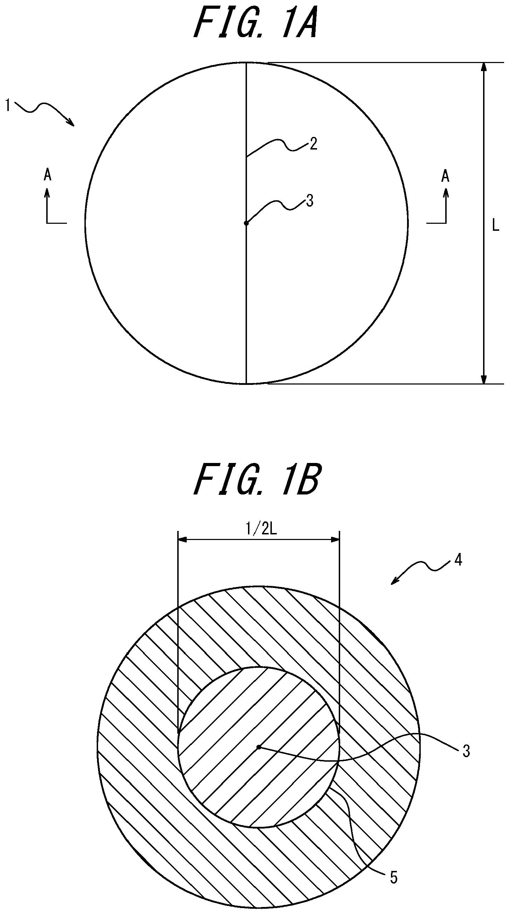

FIG. 1A is a diagram for describing one example of a composite particle for an electrochemical device of the present disclosure, and is a schematic diagram schematically illustrating the composite particle for an electrochemical device, and FIG. 1B is a cross-sectional view taken along line A-A in FIG. 1A.

The composite particle 1 of the present disclosure is a particle formed through aggregation of at least an electrode active material, a conductive material, a thermally decomposable foaming agent, a binder (all of which are not illustrated), and an optional component which may be optionally included. The amount of the thermally decomposable foaming agent contained in the composite particle 1 is required to be 0.1 parts by mass or more and 5 parts by mass or less per 100 parts by mass of the composite particle. Further, when a cross section of the composite particle 1 perpendicular to the long axis 2 of the composite particle 1, and including the midpoint 3 of the long axis 2 is subjected to a map analysis using an electron beam microanalyzer (EPMA), the value of the ratio (S_{A}/S_{B}) of the integrated value (S_{A}) of the detection intensity of carbon atoms contained outside the range of a circle 5 the center of which is coincides with the midpoint 3 of the long axis 2 and the diameter of which is one half of the length (L) of the long axis 2 (1/2L), to the integrated value (S_{B}) of the detection intensity of carbon atoms contained within the range of the circle 5, i.e., the value of the migration ratio in the composite particle 1, is required to be 4 or more and 15 or less, and is preferably 5 or more and 10 or less. According to this composite particle 1, the conductive material is made to be unevenly distributed on the surface side of the composite particle 1, so that contacts between the conductive material increase, leading to formation of reliable conductive paths inside the composite particle 1. Further, in case of application of heat which can induce foaming of the thermally decomposable foaming agent to the composite particle 1, the thermally decomposable foaming agent foams, which leads to effective blocking of conductive paths inside the composite particle 1 due to the uneven distribution of the thermally decomposable foaming agent on the surface side of the composite particle 1. Note that the above-described detection intensities of the above carbon atoms include those derived from carbon atoms contained in the conductive material, the thermally decomposable foaming agent, and the binder in the composite particle 1.

Herein, the volume average particle diameter of the composite particle 1 is preferably 30 µm or more, and more preferably 40 µm or more, and is preferably 150 µm or less, and more preferably 100 µm or less. When the volume average particle diameter of the composite particle 1 is within any of the above ranges, reliable conductive paths inside the composite particle 1 are stably maintained.

### <Electrode active material>

The electrode active material contained in the composite particles 1 is a material for accepting and/or donating electrons in an electrode for an electrochemical device. In the case where electrochemical device is a lithium ion secondary battery, the electrode active material is usually a material that can occlude and release lithium.

Herein, the electrode active material may be either a positive electrode active material or a negative electrode active material, but is preferably a positive electrode active material.

### «Positive electrode active material»

The positive electrode active material is not particularly limited, and a known positive electrode active material containing manganese or nickel can be used. From the viewpoint of increasing the capacity of the electrochemical device, a positive electrode active material (electrode active material) containing nickel is preferred. Preferred examples of such a positive electrode active material containing nickel include lithium-containing nickel oxide (LiNiO₂), lithium complex oxide of Co-Ni-Mn, lithium complex oxide of Ni-Mn-Al, lithium complex oxide of Ni-Co-Al, and a Li₂MnO₃-LiNiO₂-based solid solution, of which lithium complex oxide of Co-Ni-Mn or lithium complex oxide of Ni-Co-Al is preferred. Further, examples of the positive electrode active material containing manganese include, for example, lithium manganate (LMO:LiMn₂O₄, Li₄Mn₅O₁₂) and the like.

Positive electrode active materials may be used alone or in combination of two or more thereof at any ratio.

### «Negative electrode active material»

Further, examples of the negative electrode active material include, but are not limited to, a carbon-based negative electrode active material, a metal-based negative electrode active material, and a negative electrode active material formed by combining these materials.

### [Carbon-based negative electrode active material]

Herein, a carbon-based negative electrode active material can be defined as an active material that contains carbon as its main backbone and into which lithium can be inserted (also referred to as "doped"). Examples of the carbon-based negative electrode active material include carbonaceous materials and graphitic materials.

### -Carbonaceous material-

Examples of carbonaceous materials include graphitizing carbon and non-graphitizing carbon, typified by glassy carbon, which has a structure similar to an amorphous structure.

Here, examples of graphitizing carbon include a carbon material made from tar pitch that can be obtained from oil or coal. Specific examples of graphitizing carbon include coke, mesocarbon microbeads (MCMB), mesophase pitch-based carbon fiber, and pyrolytic vapor grown carbon fiber.

Examples of non-graphitizing carbon include baked phenolic resin, polyacrylonitrile-based carbon fiber, pseudo-isotropic carbon, baked furfuryl alcohol resin (PFA), and hard carbon.

### -Graphitic material-

Furthermore, examples of the graphitic material include natural graphite and artificial graphite. Examples of artificial graphite include artificial graphite resulting from heat treatment, mainly at 2800 °C or higher, of carbon that contains graphitizing carbon; graphitized MCMB resulting from heat treatment, at 2000 °C or higher, of MCMB; graphitized mesophase pitch-based carbon fiber resulting from heat treatment, at 2000 °C or higher, of mesophase pitch-based carbon fiber; and the like. Note that, in this disclosure, natural graphite whose surface is at least partially coated with amorphous carbon (amorphous-coated natural graphite) may be used as the carbon-based negative electrode active material.

### [Metal-based negative electrode active material]

A metal-based negative electrode active material is an active material that contains a metal, the structure of which usually contains an element that allows insertion or alloying of lithium, and that exhibits a theoretical electric capacitance of 500 mAh/g or higher per unit mass when lithium is inserted or alloyed. For the metal-based negative electrode active material, for example, lithium metal, an elementary metal that can be used to form lithium alloys (for example, Ag, Al, Ba, Bi, Cu, Ga, Ge, In, Ni, P, Pb, Sb, Si, Sn, Sr, Zn, Ti, and the like) and alloys thereof; and oxides, sulfides, nitrides, silicides, carbides, and phosphides thereof can be used. Of these metal-based negative electrode active materials, active materials containing silicon (silicon-based negative electrode active materials) are preferred. With the use of the silicon-based negative electrode active material, the capacity of the lithium ion secondary battery can be increased.

### -Silicon-based negative electrode active material-

Examples of the silicon-based negative electrode active material include silicon (Si), a silicon-containing alloy, SiO, SiOₓ, and a composite material of a Si-containing material and conductive carbon obtained by coating or complexing the Si-containing material with the conductive carbon.

Negative electrode active materials may be used alone or in combination of two or more thereof at any ratio.

### «Volume average particle diameter of electrode active material»

Here, the volume average particle diameter of the electrode active material is preferably 1 µm or more, and more preferably 5 µm or more, and is preferably 30 µm or less, and more preferably 10 µm or less. When the volume average particle diameter of the electrode active material is equal to or larger than any of the above lower limits, heat generation in case of internal short circuit in an electrochemical device produced by using the composite particles 1 can be effectively suppressed. Further, when the volume average particle diameter of the electrode active material is equal to or smaller than any of the above upper limits, an increase in the initial resistance of the obtained electrochemical device is effectively suppressed.

### «Amount of electrode active material»

Furthermore, the amount of the electrode active material to be blended into the composite particle 1 is preferable 90 parts by mass or more, more preferably 94 parts by mass or more, and is preferably 98 parts by mass or less, more preferably 96 parts by mass or less, per 100 parts by mass of the composite particle. When the blending amount of the electrode active material is equal to or more than any of the above lower limits, a sufficient capacity is ensured in an electrochemical device produced by using the composite particles 1. Further, when the blending amount of the electrode active material is equal to or less than any of the above upper limits, an increase in the initial resistance of the electrochemical device is further suppressed.

### <Conductive material>

The conductive material included in the composite particle 1 is for ensuring electrical contacts between the electrode active material in an electrode mixed material layer of an electrode for an electrochemical device. Herein, a conductive carbon material can be used as the conductive material, for example. Examples of conductive carbon materials that can be used include conductive carbon materials such as carbon black (for example, acetylene black, Ketjen black^{®} (Ketjen black is a registered trademark in Japan, other countries, or both), and furnace black), single-walled or multi-walled carbon nanotubes (multi-walled carbon nanotubes are inclusive of cup-stacked carbon nanotubes), carbon nanohorns, vapor-grown carbon fiber, milled carbon fiber obtained by pyrolyzing and then pulverizing polymer fiber, single layer or multilayer graphene, and carbon nonwoven fabric sheet obtained through pyrolysis of nonwoven fabric made from polymer fiber. Of these, from the viewpoint of effectively reducing the initial resistance of an electrochemical device produced by using the composite particles 1, carbon black or carbon nanotubes are preferably used as the conductive material, and a conductive material containing carbon nanotubes is more preferably used.

Conductive materials may be used alone or in combination of two or more thereof at any ratio.

### «Amount of conductive material»

The amount of the conductive material to be blended into the composite particle 1 is preferably 1 part by mass or more, more preferably 2 parts by mass or more, and is preferably 5 parts by mass or less, more preferably 4 parts by mass or less, per 100 parts by mass of the composite particle. When the amount of the conductive material is equal to or more than any of the above lower limits, an increase in the initial resistance is more effectively suppressed in an electrochemical device produced by using the composite particles 1. Further, when the amount of the conductive material is equal to or less than any of the above upper limits, heat generation in case of internal short circuit in the electrochemical device can be more effectively suppressed.

### <Thermally decomposable foaming agent>

The thermally decomposable foaming agent contained in the composite particle 1 is a foaming agent containing at least a foamable material which generates a gas by thermal decomposition and achieves foaming through the generated gas. Examples of the foamable material contained in the thermally decomposable foaming agent include melamine compounds, azodicarbonamide, dinitrosopentamethylenetetramine, and magnesium carbonate anhydrous. Of these, melamine compounds are preferred as the foamable material from the viewpoint of favorably blocking conductive paths inside the composite particle 1 through foaming of the foamable material. Here, examples of the melamine compounds include melamine and derivatives of melamine, and salts of these. Examples of melamine and derivatives of melamine include, for example, a compound represented by the following formula (I).

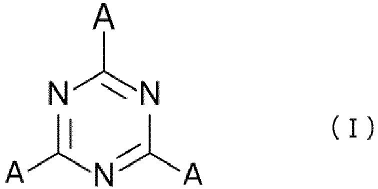

In Formula (I), each A independently represents a hydroxyl group or - NR¹R² (R¹ and R² each independently represent hydrogen atom, a hydrocarbon group, or a hydroxyl group-containing hydrocarbon group. In the case where a plurality of R¹ are present in Formula (I), the plurality of R¹ may be the same or different; in the case where a plurality of R² are present, R² may be the same or different).

Here, in the case where the hydrocarbon group or the hydroxyl group-containing hydrocarbon group as R¹ and R² has a carbon number of 2 or more, one or two or more oxygen atoms (-O-) may be interposed between carbon atoms (however, in the case where two or more oxygen atoms are interposed, they do not adjoin each other). The numbers of carbon atoms in the hydrocarbon group and the hydroxyl group-containing hydrocarbon group as R¹ and R² are not particularly limited, but are preferably 1 or more and 5 or less.

Further, the salts of melamine and derivatives of melamine are not particularly limited, and examples thereof include sulfates, cyanurates, and polyphosphates.

Of melamine compounds, melamine cyanurate or melamine is preferred and melamine cyanurate is more preferred as the foamable material contained in the thermally decomposable foaming agent, from the viewpoint of suppressing an increase in the internal resistance of the composite particle 1 by the thermally decomposable foaming agent in an electrochemical device produced by using the composite particles 1.

Melamine compounds may be used alone or in combination of two or more thereof at any ratio.

### «Thermal decomposition starting temperature»

Herein, the thermal decomposition starting temperature of the thermally decomposable foaming agent is preferably 200 °C or higher, more preferably 250 °C or higher, and is preferably 500 °C or lower, more preferably 400 °C or lower. When the thermal decomposition starting temperature of the thermally decomposable foaming agent is equal to or higher than any of the above lower limits, it is possible to prevent the thermally decomposable foaming agent from being inadvertently foamed in the production steps of the composite particles 1. Further, when the thermal decomposition starting temperature of the thermally decomposable foaming agent is equal to or lower than any of the above upper limits, the thermally decomposable foaming agent properly foams, whereby effectively blocking conductive paths inside the composite particle 1 if the temperature of an electrochemical device produced by using the composite particles 1 becomes excessively raised, so that the heat generation in case of internal short circuit in the electrochemical device can be more effectively suppressed.

### «Surface treatment of thermally decomposable foaming agent»

The thermally decomposable foaming agent is not particularly limited as long as it contains at least the above-described foamable material. Accordingly, the thermally decomposable foaming agent may consist substantially of the foamable material alone. However, from the viewpoint of further effectively suppressing heat generation in case of internal short circuit and further reducing the internal resistance of an electrochemical device, the thermally decomposable foaming agent preferably has a core-shell structure including a core made of a foamable material and a shell made of a surfactant covering at least a portion of the outer surface of the core.

It is to be noted that the reason the thermally decomposable foaming agent having the core-shell structure described above further effectively suppresses heat generation in case of internal short circuit and further reduces the internal resistance of an electrochemical device has not been clarified. It is, however, hypothesized that the thermally decomposable foaming agent having a core-shell structure in which the foamable material is covered with the surfactant is not excessively adsorbed to the electrode active material, so that sufficient electrical contacts between the electrode active material are ensured.

### [Surfactant]

The surfactant which can form the shell covering the foamable material as the core of a thermally decomposable foaming agent may be any of anionic surfactants, nonionic surfactants, and cationic surfactants.

Examples of anionic surfactants include aliphatic carboxylic acids (salts) such as lauric acid, myristic acid, palmitic acid, stearic acid, arachidic acid, and metal salts of these (sodium salt, lithium salt, potassium salt, calcium salt, magnesium salt, aluminum salt, and zinc salt); alkyl sulfuric acid salts such as sodium 2-ethylhexyl sulfate, sodium salt of lauryl sulfuric acid ester; dialkylsulfosuccinic acid salts such as sodium di-2-ethylhexyl-sulfosuccinate; and alkylbenzene sulfonic acid salts.

Examples of nonionic surfactants include ether type nonionic surfactants such as polyoxyethylene-lauryl ether, polyoxyethylene stearyl ether, and polyoxyethylene-2-ethylhexyl-ether; and ester type nonionic surfactants such as polyoxyethylene-monolaurate, polyoxyethylene-monostearate, sorbitan monostearate, sorbitan monolaurate, sorbitan triolate, and stearic acid-glycerin ester.

Examples of cationic surfactants include amine salt type cationic surfactants such as tetradecylamine acetate and octadecylamine acetate; and trimethyl types such as dodecyltrimethyl-ammonium chloride and octadecyltrimethyl-ammonium chloride.

Surfactants may be used alone or in combination of two or more thereof at any ratio. Anionic surfactants are preferred as the surfactant from the viewpoint of further reducing the internal resistance of an electrochemical device. Of these, aliphatic carboxylic acids (salts) are more preferred, and stearic acid, sodium stearate, and lithium stearate are more preferred, and sodium stearate is particularly preferred.

Further, the amount of the surfactant contained in the thermally decomposable foaming agent having the above-described core-shell structure is preferably 0.01% by mass or more, more preferably 0.1% by mass or more, even more preferably 1% by mass or more, and is preferably 10% by mass or less, more preferably 5% by mass or less, and even more preferably 4% by mass or less, when the sum of the amounts of the foamable material and the surfactant (usually, the amount of the entire thermally decomposable foaming agent) is taken to be 100% by mass. When the ratio of the surfactant in the sum of the foamable material and the surfactant is 0.01% by mass or more, the internal resistance of the electrochemical device is further reduced and heat generation in case of internal short circuit can be further effectively suppressed at the same time. On the other hand, when the ratio of the surfactant in the sum of the foamable material and the surfactant is 10% by mass or less, heat generation in case of internal short circuit in an electrochemical device can be further suppressed and the peel strength of an electrode can be increased at the same time.

### «Volume average particle diameter of particle»

The volume average particle diameter of the thermally decomposable foaming agent is preferably 1% or more, more preferably 10% or more, and is preferably 20% or less, more preferably 15% or less, with respect to the volume average particle diameter of the electrode active material. When the volume average particle diameter of the thermally decomposable foaming agent with respect to the volume average particle diameter of the electrode active material is equal to or larger than any of the above lower limits, migration of the conductive material and the thermally decomposable foaming agent to the surface side of the sprayed droplet is promoted through intervals between the electrode active material and the electrode active material inside sprayed droplets upon granulation by spray drying to produce composite particles 1. As a result, production of composite particles 1 in which the conductive material, the thermally decomposable foaming agent, and the binder are unevenly distributed can be made easier. Further, when the volume average particle diameter of the thermally decomposable foaming agent is equal to or lower than any of the above upper limits, it is possible to satisfactorily suppress an increase in the internal resistance of the composite particle 1 by the thermally decomposable foaming agent.

### «Amount of thermally decomposable foaming agent»

Herein, as described above, the amount of the thermally decomposable foaming agent to be blended into the composite particles 1 is required to be 0.1 parts by mass or more, preferably 0.2 parts by mass or more, and is required to be 5 parts by mass or less, preferably 2 parts by mass or less, per 100 parts by mass of the composite particle. When the blending amount of the thermally decomposable foaming agent is equal to or more than any of the above lower limits, heat generation in case of internal short circuit in an electrochemical device produced by using the composite particles 1 is sufficiently suppressed. Further, when the blending amount of the thermally decomposable foaming agent is equal to or lower than any of the above upper limits, it is possible to suppress an increase in the internal resistance of the composite particles 1 by the thermally decomposable foaming agent.

### «Method of preparing thermally decomposable foaming agent having core-shell structure»

The thermally decomposable foaming agent having a core-shell structure as described above can be prepared, for example, by granulating a composition containing at least a foamable material and a surfactant, and optionally containing a dispersion medium (hereinafter, this composition is referred to as "composition for a thermally decomposable foaming agent").

Here, a preferred ratio of the amounts of the foamable material and the surfactant in the composition for a thermally decomposable foaming agent may be similar to the preferred ratio of the amounts of the foamable material (core) and the surfactant (shell) in the thermally decomposable foaming agent having a desired core-shell structure.

### [Dispersion medium]

The dispersion medium can be appropriately used depending on the method of granulation and the like, and the type of the dispersion medium can also be appropriately selected according to the method of granulation. Specifically, examples of the dispersion medium include water and organic solvents, of which water is preferred. Examples of the organic solvent that can be used include acetonitrile, N-methylpyrrolidone, acetylpyridine, cyclopentanone, N,N-dimethylacetamide, dimethylformamide, dimethyl sulfoxide, methylformamide, methyl ethyl ketone, furfural, and ethylenediamine.

Dispersion mediums may be used alone or in combination of two or more thereof at any ratio.

### [Granulation]

The method of granulation for obtaining the thermally decomposable foaming agent having a core-shell structure from the composition for a thermally decomposable foaming agent described above is not particularly limited as long as a thermally decomposable foaming agent having certain particle properties can be obtained. Examples thereof include spray granulation, fluidized-bed granulation, coagulant precipitation, pH precipitation, dry mixing, and the method of granulation by wet mixing followed by drying. Of these, spray granulation is preferred.

In spray granulation, a composition for a thermally decomposable foaming agent containing a foamable material, a surfactant, and a dispersion medium can be spray-dried to obtain a thermally decomposable foaming agent having certain particle properties.

In the process, the method of preparing the composition for a thermally decomposable foaming agent is not particularly limited, and can be carried out by mixing the above-described components with a known mixer. Examples of known mixers that can be used include a ball mill, a sand mill, a beads mill, a pigment disperser, a grinding machine, an ultrasonic disperser, a homogenizer, and a planetary mixer. Further, mixing is performed for a period of from 10 minutes to several hours in a temperature range from room temperature to 80 °C.

The composition for a thermally decomposable foaming agent obtained through mixing as described above is sprayed using a spray dryer, so that droplets of the sprayed composition for a thermally decomposable foaming agent are dried inside a drying tower. This provides a thermally decomposable foaming agent (thermally decomposable foaming agent having a core-shell structure) in which the surfactant is physically and/or chemically fixed to the outer surface of the foamable material contained in liquid droplets, and the outer surfaces of at least a part of the foamable material is covered with the surfactant. The temperature of the thermally decomposable foaming agent to be sprayed is normally room temperature, but the composition may be heated to a temperature higher than room temperature. Further, the hot air temperature upon spray drying is preferably less than the thermal decomposition temperature of the thermally decomposable foaming agent, and is 80 °C or higher and 250 °C or lower, preferably 100 °C or higher and 200 °C or lower, for example.

### <Binder>

The binder is not particularly limited as long as it can bind the electrode active material, the conductive material, and the thermally decomposable foaming agent described above to each other. Examples of the binder include acrylic polymers, fluorine-based polymers, and diene-based polymers and hydroganated products thereof, of which acrylic polymers are preferred from the viewpoint of effectively suppressing an increase in the initial resistance of an electrochemical device produced by using the composite particles 1.

Binders may be used alone or in combination of two or more thereof at any ratio.

Herein, a method of producing a binder is not particularly limited, and a known polymerization method such as emulsion polymerization, suspension polymerization, dispersion polymerization, and solution polymerization can be employed.

### <<Amount of binder>

The amount of the binder blended in the composite particle 1 is preferably 0.5 parts by mass or more, more preferably 1 part by mass or more, and preferably 5 parts by mass or less, more preferably 2 parts by mass or less per 100 parts of the composite particle, from the viewpoint of more effectively suppressing an increase in the initial resistance of an electrochemical device produced by using the composite particles 1.

### <Optional component>

In addition to the electrode active material, the conductive material, the thermally decomposable foaming agent, and the binder described above, an optional components may be further contained in the composite particle 1 Examples of the optional component include a dispersant, a polymerization initiator, and a molecular weight modifier which may be used for preparation of the above-described binder.

### «Amount of optional component»

The amount of the optional component that can be blended into the composite particle 1 is preferably 0.1 parts by mass or more, more preferably 0.5 parts by mass or more, and is preferably 2 parts by mass or less, more preferably 1 part by mass or less per 100 parts of the composite particle from the viewpoint of suppressing an increase in the internal resistance of the composite particle 1 by the optional component.

### (Method of producing composite particle)

The method of producing the composite particle for an electrochemical device of the present disclosure is not particularly limited. The method of producing the composite particle of the present disclosure including the steps described below enables efficient production of composite particles.

The method of producing the composite particle for an electrochemical device of the present disclosure (hereinafter referred to as "method of producing a composite particle") includes at least a step of preparing a slurry composition for a composite particle (hereinafter referred to as "slurry composition") by dispersing an electrode active material, a conductive material, a thermally decomposable foaming agent, and a binder into a solvent (hereinafter referred to as "preparation step"), and a step of granulating the slurry composition (hereinafter referred to as "granulation step").

### <Preparation step>

In the preparation step, at least the electrode active material, the conductive material, the thermally decomposable foaming agent, and the binder are added to the solvent, and are dispersed to obtain a slurry composition. Note that the electrode active material, the conductive material, the thermally decomposable foaming agent, and the binder have been described above, and description thereof are omitted herein.

### [Solvent]

Examples of the solvent used in the preparation step include water or organic solvents. Examples of the organic solvent that can be used include acetonitrile, N-methylpyrrolidone, acetylpyridine, cyclopentanone, N,N-dimethylacetamide, dimethylformamide, dimethyl sulfoxide, methylformamide, methyl ethyl ketone, furfural, and ethylenediamine. Of these, N-methylpyrrolidone (NMP) is preferably used as the organic solvent from the viewpoints of ease of handling, safety, and the like.

Herein, the method of mixing the above-described components is not particularly limited, and the components may be mixed using a mixer, for example. As the mixer, apparatuses similar to ones for use in preparation of the above-described composition for a thermally decomposable foaming agent can be used. Further, the temperature and the time duration upon mixing are not particularly limited, and may be, for example, a temperature and time duration similar to those for preparation of the composition for a thermally decomposable foaming agent.

Further, the viscosity of the slurry composition for a composite particle measured by a B-type viscometer under the condition of room temperature (25 °C) and a rotor rotation speed of 60 rpm is required to be 500 mPa·s or more, preferably 800 mPa·s or more, and is required to be 1500 mPa·s or less, and preferably 1200 mPa·s or less. When the viscosity of the slurry composition is equal to or more than any of the above lower limits, the components can be favorably dispersed in the slurry composition. Further, when the viscosity of the slurry composition is equal to or lower than any of the above upper limits, migration of the conductive material and the thermally decomposable foaming agent in the sprayed droplet is further promoted upon granulation by spray drying to produce composite particles, so that the composite particles of the present disclosure can be more efficiently produced.

### <Granulation step>

In the granulation step, the slurry composition for a composite particle obtained in the preparation step is granulated. Here, the granulation method is not particularly limited as long as the composite particles can be obtained from the slurry composition, and examples thereof include granulation methods similar to those for obtaining a thermally decomposable foaming agent having a core-shell structure from the above-described composition for a thermally decomposable foaming agent. From the viewpoint of easily producing the composite particles, spray granulation is preferred.

### [Spray granulation]

In spray granulation, granulation is achieved by spraying the slurry composition and drying the sprayed droplets to obtain composite particles of the present disclosure. Herein, examples of the apparatus used for spraying the slurry composition include an atomizer, for example. Examples of the atomizer are classified into two types: a rotary disc type atomizer and a pressurizing type atomizer. In a rotary disc type atomizer, the rotation speed of the disc depends on the size of the disc, but is preferably 5,000 to 30,000 rpm, more preferably 15,000 to 30,000 rpm. As the rotation speed of the disc reduces, the size and the average particle diameter of the resultant composite particles increase.

The temperature of the slurry composition to be sprayed is normally room temperature (25 °C), but the slurry composition may be heated to a temperature higher than room temperature. Further, the temperature of hot air upon drying is preferably 25 to 200 °C, more preferably 50 to 180 °C, and even more preferably 80 to 150 °C. In spray drying, the method of blowing hot air is not particularly limited. Examples of the method include a method in which the hot air is made to flow in the lateral direction so as to coincide with the spray direction so that they flow in parallel to each other, a method in which spraying is carried out at the top of the drying tower and droplets descend together with the hot air, a method in which sprayed droplets and the hot air flow in opposite directions to come into contact, and a method in which sprayed droplets initially flow in parallel to the hot air and then fall by gravity to flow in the opposite direction to come into contact, for example.

### (Electrode for electrochemical device)

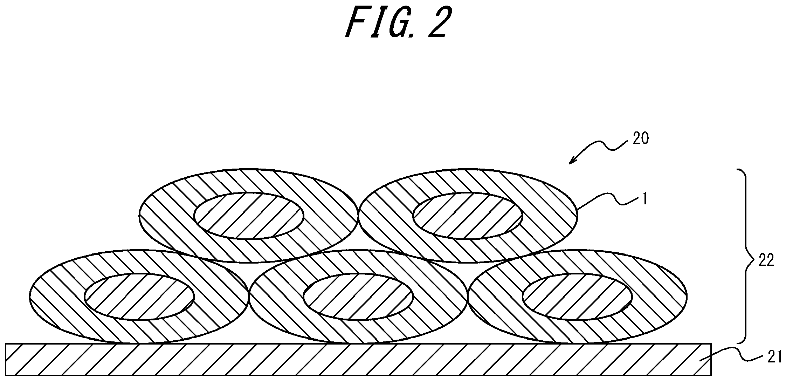

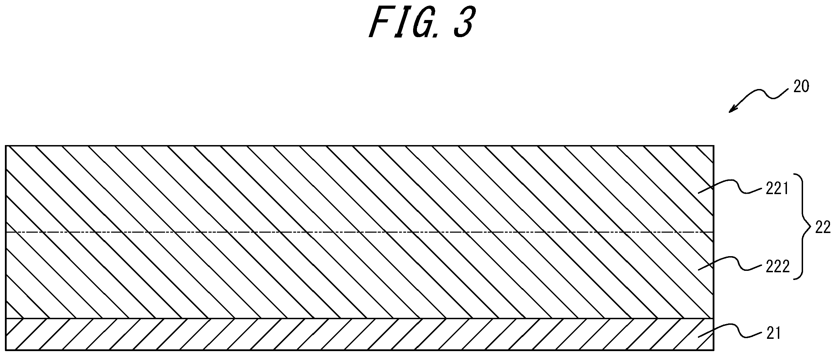

Next, an electrode for an electrochemical device of the present disclosure will be described with reference to FIGS. 2 and 3. FIGS. 2 and 3 are cross-sectional views schematically illustrating an electrode for an electrochemical device for describing one example of the electrode for an electrochemical device of the present disclosure.

First, as illustrated in FIG. 2, an electrode 20 for an electrochemical device of the present disclosure includes an electrode mixed material layer 22 on a current collector 21, and the electrode mixed material layer 22 is formed from an aggregate of the composite particles 1 of the present disclosure.

### <Current collector>

Here, the current collector 21 is not particularly limited, and may be selected according to the type of an electrochemical device (not illustrated) to which the electrode 20 for an electrochemical device is disposed. The material constituting the current collector 21 that can be used may be a metal, carbon, a conductive polymer, or the like, of which a metal is preferred. Generally, cupper, aluminum, platinum, nickel, tantalum, titanium, stainless steel, or another alloy is typically used as the metal. Of these, copper, aluminum, or an aluminum alloy is preferably used for its conductivity and voltage resistance. The form of the current collector 21 is not limited, but a metal foil is preferably used.

### <Electrode mixed material layer>

The electrode mixed material layer 22 is a layer composed of an aggregate of a plurality of composite particles 1. This enables the electrode 20 for an electrochemical device to be used as an electrode which suppresses an increase in the initial resistance and excellent in suppression of heat generation in case of internal short circuit in the electrochemical device.

One type of composite particles 1 may be used alone or two or more types of composite particles 1 may be used in combination at any ratio.

Here, the method of producing the electrode 20 for an electrochemical device is not particularly limited, and for example, the electrode 20 for an electrochemical device can be formed by pressing a plurality of composite particles 1 on the current collector 21. In this case, the pressing method may be a roll pressing method in which a roll-type press apparatus having a pair of rolls is used, for example. In this method, while the current collector 21 is fed by the rolls, the composite particles 1 are fed to the roll-type press apparatus by a feeding device such as a screw feeder to thereby form the electrode mixed material layer 22 on the current collector 21. Another method is a method in which a plurality of composite particles 1 are spread on the current collector 21, and the thickness is adjusted by smoothing the surface of the composite particles 1 with a blade or the like, followed by molding, for example.

### [Amount of composite particles per unit surface of current collector]

The amount of the composite particles 1 per unit surface area of the current collector 21 is preferably 25 mg/cm² or more, more preferably 30 mg/cm² or more, and is preferably 80 mg/cm² or less, and more preferably 60 mg/cm² or less. When the amount of the composite particles 1 per unit surface area of the current collector 21 is equal to or more than any of the above lower limits, an electrochemical device having a high energy density can be produced by using the electrode 20 for an electrochemical device. Further, when the amount of the composite particles 1 per unit surface area of the current collector 21 is equal to or less than any of the above upper limits, an increase in the initial resistance of the electrochemical device is suppressed and the size of the electrochemical device can be reduced at the same time.

### [Distribution of thermally decomposable foaming agent in electrode mixed material layer]

Further, as illustrated in FIG. 3, in the electrode 20 for an electrochemical device, when the electrode mixed material layer 22 is cut at the center in the thickness direction thereof and the upper portion 221 of the electrode mixed material layer and the bottom portion 222 of the electrode mixed material layer yielded are subjected to a map analysis using an electron beam microanalyzer (EPMA), the ratio (S1:S2) of the integrated value (S1) of the detection intensity of carbon atoms contained in the upper portion 221 of the electrode mixed material layer to the integrated value (S2) of the detection intensity of carbon atoms contained in the bottom portion 222 of the electrode mixed material layer is preferably in the range of 60:40 to 40:60, more preferably in the range of 52:48 to 48:52. This can further improve suppression of heat generation in case of internal short circuit in the electrode 22 for an electrochemical device.

### [Porosity]

Further, in the electrode 20 for an electrochemical device, the electrode mixed material layer 22 is preferably pressed so that the porosity becomes 10% or more and 50% or less. When the porosity of the electrode mixed material layer 22 is within the above range, an increase in the initial resistance is sufficiently suppressed in an electrochemical device including the electrode 20 for an electrochemical device.

In this specification, the "porosity of the electrode mixed material layer" can be determined by calculating the sum of the volumes of voids by subtracting the true volume of the electrode mixed material layer from the apparent volume of the electrode mixed material layer, and calculating the ratio of the sum of the volumes of the voids to the apparent volume, to be used as the porosity. The true volume of the electrode mixed material layer can be obtained by summing up the value obtained by multiplying the true density of each constituent material by the constituent ratio thereof.

### (Electrochemical device)

The electrochemical device of the present disclosure includes the above-described electrode for an electrochemical device. The electrochemical device of the present disclosure may be, but is not specifically limited to, a lithium ion secondary battery, an electric double-layer capacitor, and a lithium ion capacitor, and is preferably a lithium ion secondary battery. Because the electrochemical device of the present disclosure includes the electrode for an electrochemical device of the present disclosure, an increase in the initial resistance is suppressed and the electrochemical device has excellent property to suppress heat generation in case of internal short circuit.

Although the following describes one example in which the electrochemical device is a lithium ion secondary battery, the electrochemical device of the present disclosure is not limited to the following example. A lithium ion secondary battery as the electrochemical device of the present disclosure generally includes electrodes (a positive electrode and a negative electrode), an electrolyte solution, and a separator, wherein the electrode for an electrochemical device of the present disclosure is used as at least one of the positive electrode and the negative electrode.

### <Electrode>

Here, the electrode which can be used for a lithium ion secondary battery as the electrochemical device of the present disclosure other than the above-described electrode for an electrochemical device of the present disclosure is not particularly limited, and known electrodes can be used. Specifically, an electrode obtained by forming an electrode mixed material layer on a current collector by a known production method may be used as an electrode other than the electrode for a electrochemical device set forth above.

### <Electrolyte solution>

As the electrolyte solution, an organic electrolyte solution yielded by dissolving a supporting electrolyte into an organic solvent is normally used. The supporting electrolyte may, for example, be a lithium salt. Examples of lithium salts include LiPF₆, LiAsF₆, LiBF₄, LiSbF₆, LiAlCl4, LiClO₄, CF₃SO₃Li, C₄F₉SO₃Li, CF₃COOLi, (CF₃CO)₂NLi, (CF₃SO₂)₂NLi, and (C₂F₅SO₂)NLi. Of these lithium salts, LiPF₆, LiClO₄, and CF₃SO₃Li are preferable in that they easily dissolve in solvent and exhibit a high degree of dissociation, with LiPF₆ being particularly preferable. Electrolytes may be used alone or in combination of two or more thereof at any ratio. Use of a supporting electrolyte having a high degree of dissociation usually tends to lead to an increase in lithium ion conductivity. Accordingly, lithium ion conductivity can be adjusted through the type of supporting electrolyte that is used.

The organic solvent used in the electrolyte solution is not specifically limited so long as the supporting electrolyte can dissolve therein. Examples of suitable organic solvents that can be used include carbonates such as dimethyl carbonate (DMC), ethylene carbonate (EC), diethyl carbonate (DEC), propylene carbonate (PC), butylene carbonate (BC), and methyl ethyl carbonate (EMC); esters such as γ-butyrolactone and methyl formate; ethers such as 1,2-dimethoxyethane and tetrahydrofuran; and sulfur-containing compounds such as sulfolane and dimethyl sulfoxide. Furthermore, a mixed liquid of such solvents may be used. Of these solvents, carbonates are preferable due to having a high permittivity and a wide stable potential region, and a mixture of ethylene carbonate and ethyl methyl carbonate is more preferable.

The concentration of the electrolyte in the electrolyte solution can be adjusted as needed. For example, the concentration is preferably 0.5% to 15% by mass, more preferably 2% to 13% by mass, and even more preferably 5% to 10% by mass. Known additives such as vinylene carbonate, fluoroethylene carbonate, and ethyl methyl sulfone may be added to the electrolyte solution.

### <Separator>

Examples of separators that can be used include, but are not specifically limited to, those described in JP 2012-204303 A. Of these separators, a fine porous membrane made of polyolefinic (polyethylene, polypropylene, polybutene, or polyvinyl chloride) resin is preferred because such a membrane can reduce the total thickness of the separator, which increases the ratio of electrode active material in the lithium ion secondary battery, and consequently increases the capacity per volume. Further, a functional layer-attached separator wherein a functional layer (a porous membrane layer and/or an adhesive layer) is provided on one surface or both surfaces of the separator substrate may be used.

### <Method of producing lithium ion secondary battery>

The lithium ion secondary battery according to this disclosure may be produced, for example, by stacking the positive electrode and the negative electrode having the separator interposed between, rolling or folding the resultant stack as necessary in accordance with the battery shape to place the stack in a battery container, injecting the electrolyte solution into the battery container, and sealing the battery container. In order to prevent pressure-increase inside the secondary battery and occurrence of overcharging or overdischarging, an overcurrent preventing device such as a fuse or a PTC device; an expanded metal; or a lead plate may be provided as necessary. The secondary battery may take any shape, for example, may be shaped like a coin, a button, a sheet, a cylinder, a square, or a flat shape.

### EXAMPLES

The present disclosure will now be described below based on examples. However, present disclosure is not limited to the examples disclosed herein. In the following description, "%" and "parts" used in expressing quantities are by mass, unless otherwise specified.

Moreover, in the case of a polymer that is produced through copolymerization of a plurality of types of monomers, the proportion constituted by a monomer unit in the polymer that is formed through polymerization of a given monomer is normally, unless otherwise specified, the same as the ratio (charging ratio) of the given monomer among all monomers used in polymerization of the polymer.

Further, in Examples and Comparative Examples, the volume average particle diameters of composite particles, the viscosities of slurry compositions, the values of the migration ratio (S_{A}/S_{B}) in the composite particles, the ratios of the distributions of carbon atoms in electrode mixed material layers, and suppression of heat generation in case of internal short circuit and the initial resistances of lithium ion secondary batteries were measured or evaluated using the following methods. Further, polymers A to C were prepared by the methods to be described later.

### <Volume average particle diameter of particulate polymer>

The volume-based D50 diameter of composite particles was measured from a dry integrated particle size distribution determined by a laser diffraction/scattering particle size distribution analyzer ("Microtrack MT3200II", available from Nikkiso Co., Ltd.), assuming that the pressure of the air used for dispersion upon the measurement was 0.02 MPa, to obtain a volume averaged value of the composite particles.

### <Viscosity of slurry composition>

The viscosity of a slurry composition was measured using a B-type viscometer under the conditions as follows: temperature: 25 ± 3 °C, rotor :M4, and rotor rotation speed: 60 rpm.

### <Value of the migration ratio (S_{A}/S_{B}) in compound particle>

Ten composite particles were randomly selected under an electron microscopy. Each of the selected composite particles was cut with a focused ion beam (FIB) on the plane which was perpendicular to the long axis of the composite particle and passed through the midpoint of the long axis to yield a cross section of the composite particle. An EPMA elemental analysis was performed on a yielded cross section of the one composite particle. In this EPMA elemental analysis, an electron probe microanalyzer (FE-EPMA, "JXA-8530F", manufactured by JEOL Ltd., acceleration voltage: 10.0 kV, irradiation current: 30 nA) was used for mapping carbon atoms (analytical X-ray and spectroscopic crystal: C Kα). In the cross section of the composite particle, the integrated value Sₐ of the detection intensity of carbon atoms outside the range of the circle the center of which is coincides with the midpoint of the long axis of the composite particle and the diameter of which is one half of the length of the long axis, and the integrated value S_{b} of the detection intensity of carbon atoms within the range of the circle were determined. The value of ratio of the integrated values (Sₐ/S_{b}) of the detected intensities of carbon atoms inside and outside the circle was then determined. The values of the ratios of the other selected composite particles were calculated in the same manner, and the average of the selected particles were determined to be used as the value of the migration ratio (S_{A}/S_{B}) in the composite particles.

### <Ratio of distribution of carbon atoms>

An electrode mixed material layer was cut at the center in the thickness direction of the electrode mixed material layer with an focused ion beam (FIB) to yield the upper portion of the electrode mixed material layer and the bottom portion of the electrode mixed material layer. Each of the cross sections of the upper portion of the electrode mixed material layer and the bottom portion of the electrode mixed material layer yielded was analyzed under similar condition using an apparatus similar to the apparatus used for determining the value of the migration ratio (S_{A}/S_{B}) in the composite particles, and the integrated value (S1) of the detection intensity of carbon atoms in the upper portion of the electrode mixed material layer and the integrated value (S2) of the detection intensity of carbon atoms in the bottom portion of the electrode mixed material layer were determined. The ratio (S₁:S₂) of the carbon atoms distributed in the upper portion of the electrode mixed material layer to the carbon atoms distributed in the bottom portion of the electrode mixed material layer was then determined.

### <Suppression of heat generation in case of internal short circuit (forced internal short circuit test)>

A lithium ion secondary battery produced was charged to 4.30 V at a rate of 0.2C in the environment of 25 °C by the constant-current constant-voltage (CC-CV) method (cut-off condition: 0.02C). Thereafter, an iron nail having a diameter of 3 mm and a length of 10 cm was pieced though the lithium ion secondary battery near the center thereof at a speed of 5 m/minute to thereby forcedly induce short circuit. Forced short circuit was induced in five lithium ion secondary batteries (test specimens) using the same procedure, and the number of test specimens which had neither destruction nor spark was rated according to the following criteria. A greater number of test specimens which have neither destruction nor spark indicates that the lithium ion secondary batteries are more excellent in suppression of heat generation in case of internal short circuit.
SA: The number of test specimens which had neither destruction nor spark was 5
A: The number of test specimens which had neither destruction nor spark was 4
B: The number of test specimens which had neither destruction nor spark was 3
C: The number of test specimens which had neither destruction nor spark was 2
D: The number of test specimens which had neither destruction nor spark is 1 or less.

### <Initial resistance>

After injection of an electrolyte solution, a lithium ion secondary battery was charged to a cell voltage of 3.65 V at 0.2C and left to stand at 60 °C for 12 hours. The battery was then discharged to a cell voltage of 3.00 V at 0.2C to perform aging treatment. Thereafter, the lithium ion secondary battery was charged to 4.30 V at 0.2C in the environment of 25 °C, and was discharged to 3.00 V at 0.2C. Thereafter, the lithium ion secondary battery was charged to 3.7 V at 0.2C in the environment of 25 °C, and the voltage V0 at that time was measured. The lithium ion secondary battery was then discharged at a discharge rate of 1C in the environment of 25 °C and voltage V1 10 seconds after initiation of discharging was measured. The resistance property was evaluated according to a voltage change given by ΔV = V0 - V1. A smaller value of ΔV indicates that the lithium ion secondary battery was excellent in resistance characteristics, and that an increase in initial resistance is suppressed.
SA: ΔV (mV) ≤ 13
A: 13 < ΔV (mV) ≤ 15
B: 15 < ΔV (mV) ≤ 17
C: 17 < ΔV (mV) ≤ 19
D: 19 < ΔV (mV) ≤ 21
E: 21 < ΔV (mV)

### <Production of polymer A>

An autoclave equipped with a stirrer was charged with 164 parts of deionized water, 5.0 parts of methacrylic acid as a bindable functional group-containing monomer, 63.0 parts of 2-ethylhexylacrylate as a (meth)acrylic ester monomer, 27.0 parts of styrene as an aromatic vinyl monomer, 5.0 parts of acrylonitrile as a nitrile group-containing monomer, 0.3 parts of potassium persulfate as a polymerization initiator, 1.2 parts of sodium polyoxyethylene alkyl ether sulfate as an emulsifier, and 0.3 parts of tert-dodecyl mercaptan as a molecular weight modifier. After the mixture was sufficiently stirred, the mixture was heated at 80 °C for 3 hours for perform polymerization to obtain an aqueous dispersion of a polymer. The polymerization conversion rate was calculated to be 96% from the solid content concentration. Subsequently, N-methyl-2-pyrrolidone (NMP) as an organic solvent was added to the aqueous dispersion of the resultant polymer so that the solid content concentration of the polymer became 7%. Then, distillation under reduced pressure at 90 °C was carried out to remove water and excessive NMP, thereby obtaining an NMP solution of a polymer A as an acrylic polymer (solid content concentration: 8%).

### <Preparation of polymer B>

Polyvinylidene fluoride ("HSV900", manufactured by Arkema) was dissolved in NMP so that the solid content concentration was adjusted to 8%, thereby obtaining an NMP solution of a polymer B as a fluorine-based polymer (solid content concentration: 8%).

### <Preparation of polymer C>

A polymerization can A was charged with 74 parts of deionized water, 0.2 parts of sodium dodecyldiphenylether sulfonate as an emulsifier, 1.0 parts of ammonium persulfate as a polymerization initiator, and 9.7 parts of deionized water, and the mixture was heated to 70 °C and stirred for 30 minutes at to 70 °C.

Next, a separate polymerization can B was charged with 75.0 parts of 2-ethylhexyl acrylate as a (meth)acrylic acid ester monomer, 22.0 parts of acrylonitrile and 2.0 parts of itaconic acid as optional monomers, 1.0 part of 2-hydroxyethyl acrylate, 0.8 parts of sodium dodecyldiphenylether sulfonate as an emulsifier, and 74 parts of deionized water, and the mixture was stirred at a temperature to 25 °C or below to produce an emulsion. The produced emulsion was gradually added to polymerization can A from polymerization can B over a period of about 200 minutes, and then stirred for about 180 minutes until the monomer conversion rate reached 97% or more. The mixture was then cooled to complete the reaction. Thereafter, the pH was adjusted using a 4%-aqueous solution of sodium hydroxide, and the unreacted monomer was removed by distillation under heating and reduced pressure to obtain a water dispersion of a polymer C as an acrylic polymer (solid content concentration: 40%).

### (Example 1)

### <Production of composite particles>

A planetary mixer was charged with 94 parts of NMC111, a lithium complex oxide-based active material of Co-Ni-Mn (LiNi_{0.33}Co_{0.33}Mn_{0.33}O₂, reversible capacity: 160 mAh/g), as a positive electrode active material (electrode active material), 3 parts of carbon black A ("Li-435", manufactured by Denka Corporation) as a conductive material, 1 part of melamine cyanurate as a thermally decomposable foaming agent, and 2 parts (by solid content equivalents) of the polymer A (acrylic) as a binder, followed by mixing. Further, NMP as an organic solvent was gradually added, and mixed under stirring at a temperature of 25 ± 3 °C at a rotation speed of 25 rpm to obtain a slurry composition having a viscosity of 1000 mPa·s.

This slurry composition was granulated by spray drying. In the spray granulation, a spray dryer (manufactured by Ohkawara Kakohki Co., Ltd.) and a rotary disc-type atomizer (diameter: 65 nm) were used, wherein the rotation speed of the disc was 25,000 rpm, the temperature of the hot air was 150 °C, the temperature of the particle collection outlet was 90 °C. The resultant composite particles were classified using sieves in the range from 45 µm to 125 µm. Measurements and evaluations were carried out using the produced composite particles. The results are summarized in Table 1.

### <Production of positive electrode>

The produced composite particles were fed to rolls (roll temperature: 100 °C, press linear pressure: 4 kN/cm) of a roll press machine ("Push-cut rough surface heat roll", manufactured by HIRANO GIKENKOGYO Co., Ltd.), and a positive electrode mixed material layer as an electrode mixed material layer was formed into sheet on an aluminum foil having a thickness of 15 µm at a forming speed of 20 m/min. Thereafter, the positive electrode mixed material layer side of the produced positive electrode web was roll pressed in the environment of a temperature of 25 ± 3 °C to obtain a positive electrode having a porosity in the positive electrode mixed material layer of 30%. Measurements and evaluations were carried out using the produced positive electrode. The results are summarized in Table 1.

### <Production of negative electrode>

A 5-MPa pressure resistant vessel equipped with a mixer was charged with 65 parts of styrene as an aromatic vinyl monomer, 34 parts of 1,3-butadiene as an aliphatic conjugated diene monomer, 2 parts of itaconic acid as a carboxylic acid group-containing monomer, 1 part of 2-hydroxyethyl acrylate as a hydroxyl group-containing monomer, 0.3 part of t-dodecylmercaptan as a molecular weight regulator, 5 parts of sodium dodecyl benzene sulfonate as an emulsifier, 150 parts of deionized water as a solvent, and 1 part of potassium persulfate as a polymerization initiator. The mixture was sufficiently mixed and then heated to 55 °C to start polymerization. When the monomer consumption reached 95.0%, the vessel was cooled to terminate the reaction. The aqueous dispersion containing the thus-obtained polymer was adjusted to a pH of 8 through addition of a 5-% sodium hydroxide aqueous solution. After that, unreacted monomers were removed by heated vacuum distillation. Cooling was subsequently performed to a temperature of 30 °C or lower to obtain a water dispersion containing a binder for a negative electrode (binder composition for negative electrode).

A planetary mixer was charged with 97 parts of natural graphite (average particle diameter (D50) :13 µm, theoretical capacity: 360 mAh/g) as a negative electrode active material and 1 part of carboxy methylcellulose (CMC) as a thickener (by solid content equivalents). These materials were diluted to a solid content concentration of 60% with deionized water and were then kneaded at a rotation speed of 45 rpm for 60 minutes. Thereafter, 1.5 parts equivalent to solid content of the binder composition for a negative electrode obtained as above was charged, and kneaded at a rotation speed of 40 rpm for 40 minutes. Then, deionized water was added so that the viscosity became 3000 ± 500 mPa·s to prepare a slurry composition for a negative electrode.

A comma coater was used to apply the slurry composition for a negative electrode onto the surface of an electrolytic copper foil of 15 µm in thickness serving as a current collector such that the applied amount of the slurry composition was 15.5 ± 0.5 mg/cm². The copper foil onto which the slurry composition for a negative electrode had been applied was conveyed inside an 120 °C oven for 2 minutes and a 130 °C oven for 2 minutes at a speed of 400 mm/minute in order to dry the slurry composition on the copper foil, and thereby obtain a negative electrode web in which the negative electrode mixed material layer was formed on the current collector. Thereafter, the negative electrode mixed material layer side of the produced negative electrode web was roll pressed in the environment at a temperature of 25 ± 3 °C to obtain a negative electrode having a density of the negative electrode mixed material layer of 1.60 g/cm³.

### <Preparation of separator>

A single-layer polypropylene separator (product name: "Celgard 2500", manufactured by Celgard, LLC.) was provided as a separator.

### <Production of lithium ion secondary battery>

A laminated laminate cell (equivalent to the initially designed discharge capacity of 3 Ah) was produced from the negative electrode, the positive electrode, and the separator described above, and placed in an aluminum packing material, and was dried under vacuum under conditions of 60 °C and 10 hours. Thereafter, the aluminum packing material was filled with an LiPF₆ solution having a concentration of 1.0 M as an electrolyte solution (solvent: mixed solvent of ethylene carbonate (EC)/diethyl carbonate (DEC) = 5/5 (volume ratio); additive: 2% by volume (solvent ratio) of vinylene carbonate). The aluminum packing material was then closed with heat sealing at a temperature of 150 °C to tightly seal up the opening of the aluminum packing material, and a lithium ion secondary battery was accordingly produced. Evaluations were made using the obtained lithium ion secondary battery. The results are summarized in Table 1.

### (Examples 2 and 3)

Composite particles, a positive electrode, a negative electrode, a separator, and a lithium ion secondary battery were produced and evaluations were made in the same manner as in Example 1 except that a slurry composition having a viscosity listed in Table 1 was used upon producing the composite particles. The results are summarized in Table 1.

### (Example 4)

Composite particles, a positive electrode, a negative electrode, a separator, and a lithium ion secondary battery were produced and evaluations were made in the same manner as in Example 1 except that the blending amounts of the electrode active material and the thermally decomposable foaming agent were changed to the amounts listed in Table 1 upon preparing the composite particles. The results are summarized in Table 1.

### (Example 5)

Composite particles, a positive electrode, a negative electrode, a separator, and a lithium ion secondary battery were produced and evaluations were made in the same manner as in Example 1 except that carbon black B ("SuperC65", manufactured by IMERYS) was used in place of carbon black A as the conductive material upon preparing the slurry composition. The results are summarized in Table 1.

### (Example 6)

Composite particles, a positive electrode, a negative electrode, a separator, and a lithium ion secondary battery were produced and evaluations were made in the same manner as in Example 1 except that the blending amounts of the electrode active material and the conductive material were changed to the amounts listed in Table 1 upon preparing the slurry composition for a composite particle. The results are summarized in Table 1.

### (Example 7)

Composite particles, a positive electrode, a negative electrode, a separator, and a lithium ion secondary battery were produced and evaluations were made in the same manner as in Example 1 except that the polymer B (fluorine-based) was used in place of the polymer A as the binder upon preparing the slurry composition. The results are summarized in Table 1.

### (Example 8)

Composite particles, a positive electrode, a negative electrode, a separator, and a lithium ion secondary battery were produced and evaluations were made in the same manner as in Example 1 except that NMC622 (lithium complex oxide-based electrode active material of Co-Ni-Mn (LiNi_{0.6}Co_{0.2}Mn_{0.2}O₂, reversible capacity: 170 mAh/g)) was used in place of NMC111 as the electrode active material upon preparing the slurry composition. The results are summarized in Table 2.

### (Example 9)

Composite particles, a positive electrode, a negative electrode, a separator, and a lithium ion secondary battery were produced and evaluations were made in the same manner as in Example 1 except that melamine was used in place of melamine cyanurate as the thermally decomposable foaming agent upon preparing the slurry composition. The results are summarized in Table 2.

### (Example 10)

Composite particles, a positive electrode, a negative electrode, a separator, and a lithium ion secondary battery were produced and evaluations were made in the same manner as in Example 1 except that the amount of the composite particles per unit surface of the current collector was adjusted to 70 mg/cm² upon producing the positive electrode. The results are summarized in Table 2.

### (Example 11)

Upon preparing the slurry composition, water was used in place of NMP as the solvent . Further, lithium manganate (LMO:LiMn₂O₄, reversible capacity: 105 mAh/g) was used as the electrode active material instead of MNC111. Further, carbon black B ("SuperC65", manufactured by IMERYS) was used as the conductive material in place of carbon black A, 1 part of the polymer C (acrylic) was used as the binder in place of the polymer A, and 1 part of carboxy methylcellulose (CMC) serving as a dispersant was used as an optional component. Further, upon producing the positive electrode, the amount of the composite particles per unit surface area of the current collector was adjusted to 50 mg/cm². except for the above differences, composite particles, a positive electrode, a negative electrode, a separator, and a lithium ion secondary battery were produced and evaluations were made in the same manner as in Example 1. The results are summarized in Table 2.

### (Example 12)

A slurry composition, a positive electrode, a negative electrode, a separator, and a lithium ion secondary battery were produced and evaluations were made in the same manner as in Example 1 except that azodicarbonamide was used in place of melamine cyanurate as the thermally decomposable foaming agent upon preparing the slurry composition. The results are summarized in Table 2.

### (Example 13)

Composite particles, a positive electrode, a negative electrode, a separator, and a lithium ion secondary battery were produced and evaluations were made in the same manner as in Example 1 except that dinitrosopentamethylenetetramine was used in place of melamine cyanurate as the thermally decomposable foaming agent upon preparing the slurry composition. The results are summarized in Table 2.

### (Example 14)

Composite particles, a positive electrode, a negative electrode, a separator, and a lithium ion secondary battery were produced and evaluations were made in the same manner as in Example 1 except that magnesium carbonate anhydrous ("MAGTHERMO MS-S", manufactured by Konoshima Chemical Co., Ltd.) was used in place of melamine cyanurate as the thermally decomposable foaming agent upon preparing the slurry composition. The results are summarized in Table 2.

### (Example 15)

Composite particles, a positive electrode, a negative electrode, a separator, and a lithium ion secondary battery were produced and evaluations were made in the same manner as in Example 1 except that a thermally decomposable foaming agent A prepared as described below was used in place of melamine cyanurate as the thermally decomposable foaming agent upon preparing the slurry composition. The results are summarized in Table 3.

### <Preparation of thermally decomposable foaming agent A>

A reactor was charged with 63.0 g of melamine and 64.5 g of cyanuric acid ground to a volume average particle diameter of 100 µm in an equimolar amount. Deionized water was further added so that the solid content concentration was adjusted to 55% to thereby obtain a mixture. Thereafter, the mixture was heated to 75 °C under stirring and stirred for 120 minutes to prepare a slurry containing melamine cyanurate (foamable material) as cores of a thermally decomposable foaming agent A. To the obtained slurry, sodium stearate being an anionic surfactant was added in an amount of 3 parts to 97 parts of melamine cyanurate, and deionized water was added so that the solid content concentration was adjusted to 20%. The mixture was further stirred for 30 minutes to obtain a composition for a thermally decomposable foaming agent. The obtained composition for a thermally decomposable foaming agent was dried by spray drying at 140 °C to thereby obtain a thermally decomposable foaming agent A having a core-shell structure.

### (Example 16)

Composite particles, a positive electrode, a negative electrode, a separator, and a lithium ion secondary battery were produced and evaluations were made in the same manner as in Example 1 except that a thermally decomposable foaming agent B prepared as described below was used in place of melamine cyanurate as the thermally decomposable foaming agent upon preparing the slurry composition. The results are summarized in Table 3.

### <Production of polymer B>

A reactor was charged with 63.0 g of melamine and 64.5 g of cyanuric acid ground to a volume average particle diameter of 100 µm in an equimolar amount. Deionized water was further added so that the solid content concentration was adjusted to 55% to thereby obtain a mixture. Thereafter, the mixture was heated to 75 °C under stirring and stirred for 120 minutes to prepare a slurry containing melamine cyanurate (foamable material) as cores of a thermally decomposable foaming agent B. To the obtained slurry, stearic acid being an anionic surfactant was added in an amount of 3 parts to 97 parts of melamine cyanurate, and deionized water was added so that the solid content concentration was adjusted to 20%. The mixture was further stirred for 30 minutes to obtain a composition for a thermally decomposable foaming agent. The obtained composition for a thermally decomposable foaming agent was dried by spray drying at 140 °C to thereby obtain a thermally decomposable foaming agent B having a core-shell structure.

### (Example 17)

Composite particles, a positive electrode, a negative electrode, a separator, and a lithium ion secondary battery were produced and evaluations were made in the same manner as in Example 1 except that carbon nanotubes ("FT7010", manufactured by Cnano Technology Ltd.) were used in place of carbon black A as the conductive material upon preparing the slurry composition. The results are summarized in Table 3.

### (Comparative Examples 1 and 2)

Composite particles, a positive electrode, a negative electrode, a separator, and a lithium ion secondary battery were produced and evaluations were made in the same manner as in Example 1 except that a slurry composition having a viscosity listed in Table 4 was used upon producing the composite particles. The results are summarized in Table 4.

### (Comparative Example 3)

Composite particles, a positive electrode, a negative electrode, a separator, and a lithium ion secondary battery were produced and evaluations were made in the same manner as in Example 1 except that the blending amounts of the electrode active material and the thermally decomposable foaming agent were changed to the amounts listed in Table 4 upon producing the composite particles. The results are summarized in Table 4.

### (Comparative Example 4)

Composite particles, a positive electrode, a negative electrode, a separator, and a lithium ion secondary battery were produced and evaluations were made in the same manner as in Example 1 except that a thermally decomposable foaming agent having a volume average particle diameter listed in Table 4 was used instead upon preparing the slurry composition. The results are summarized in Table 4.

### (Comparative Example 5)

A slurry composition containing components similar to those of the slurry composition used in Example 1 was prepared except that the viscosity of the slurry composition was adjusted to 3500 mPa·s. A positive electrode, a negative electrode, a separator, and a lithium ion secondary battery were produced and evaluations were made in the same manner as in Example 1 except that the obtained slurry composition was applied to a current collector and dried to form an electrode mixed material layer. The results are summarized in Table 4.

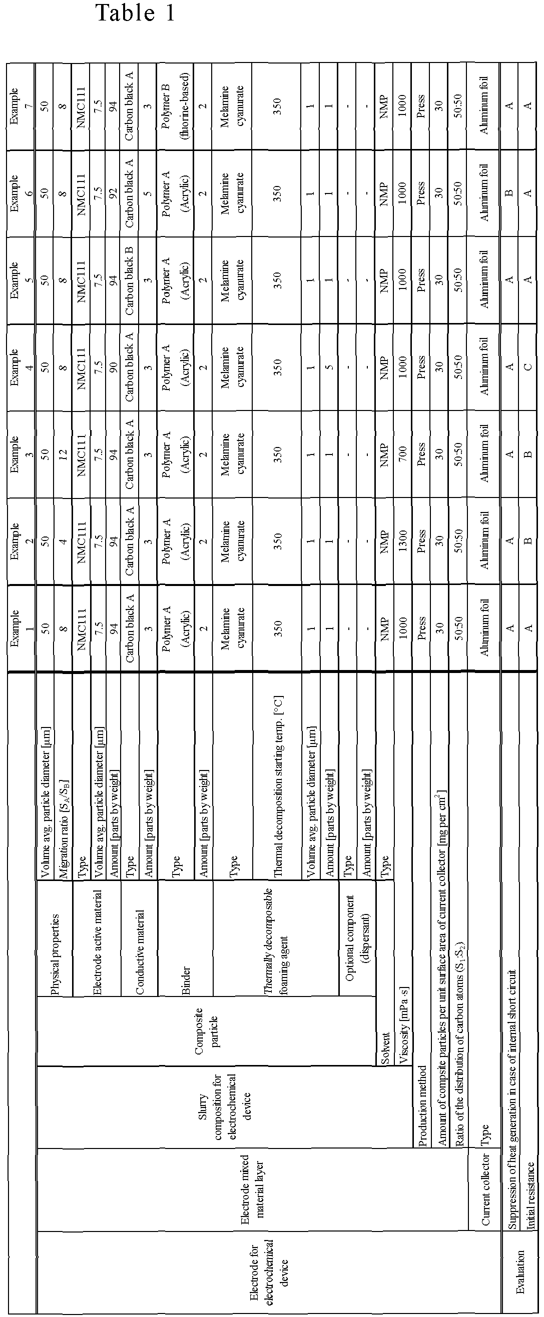

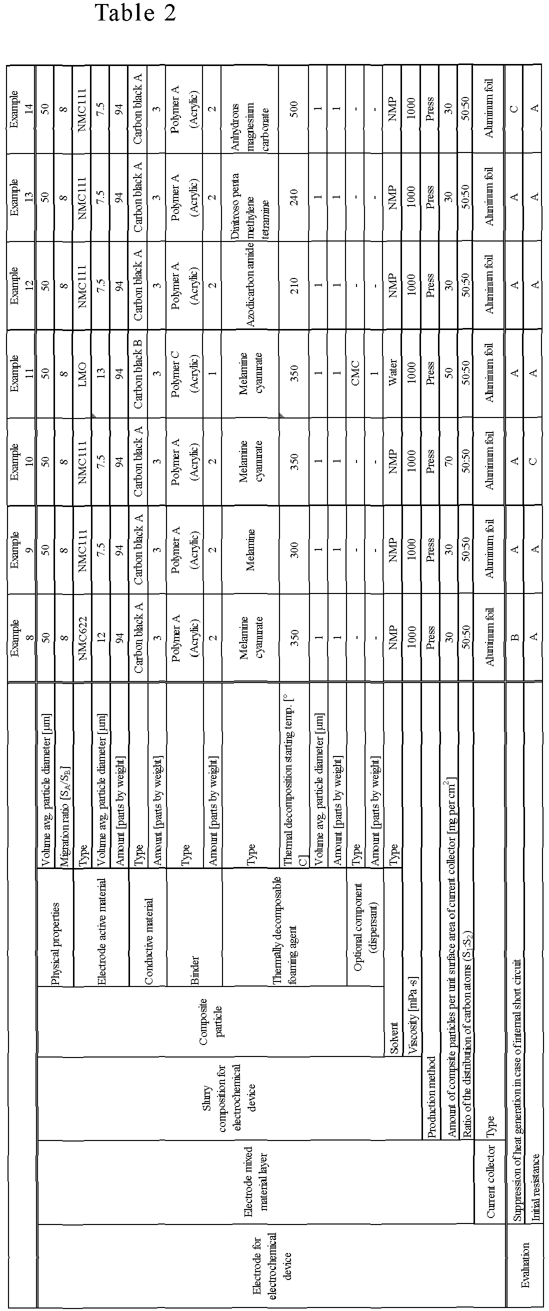

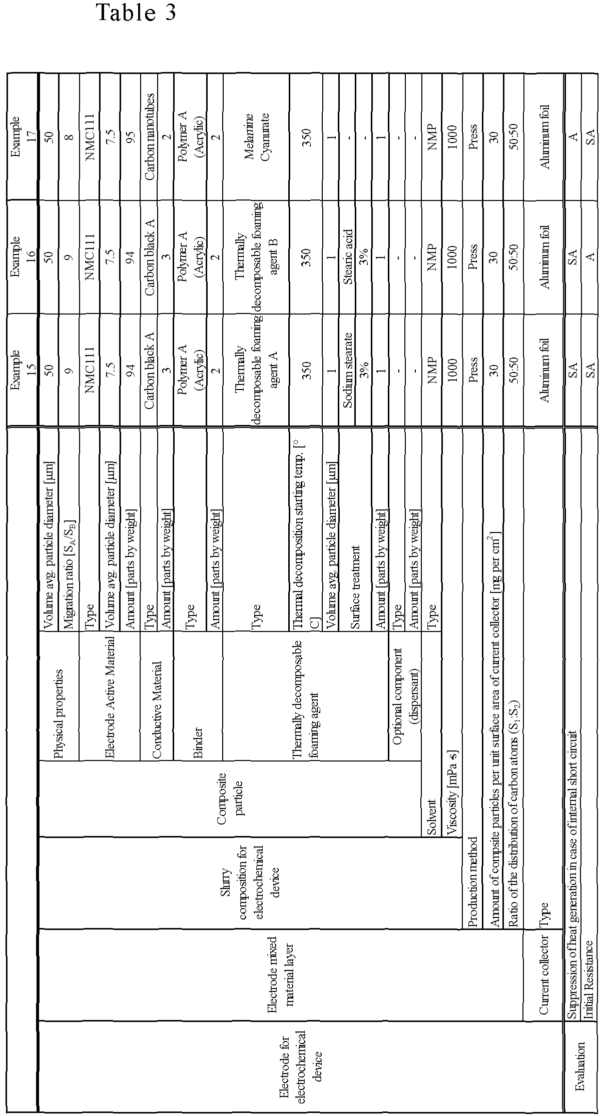

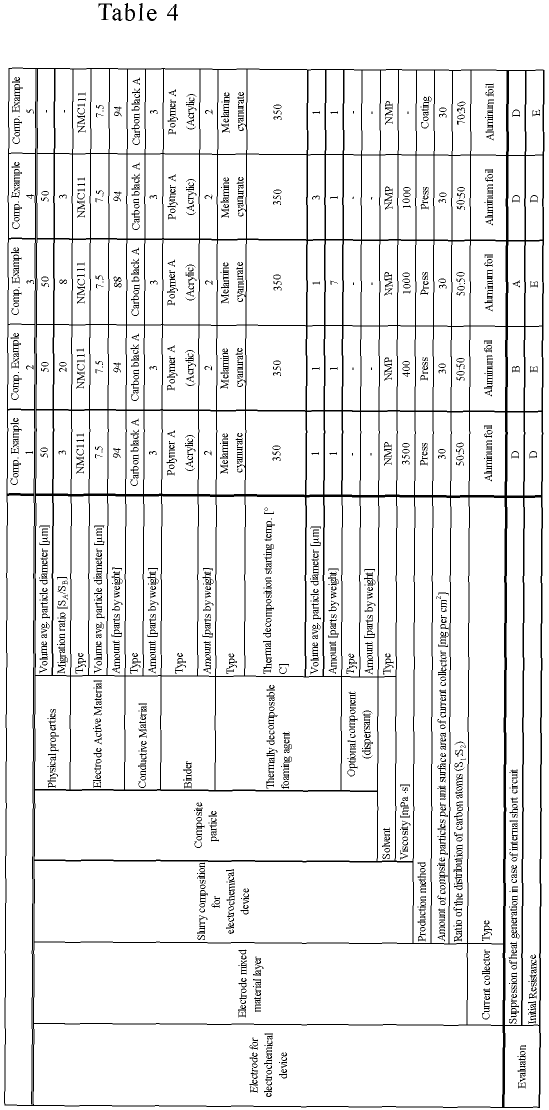

From Tables 1 to 4, it can be understood that the lithium ion secondary batteries (Examples 1 to 17) produced by using the composite particles which contained the electrode active material, the conductive material, the thermally decomposable foaming agent, and the binder, in which the amount of the thermally decomposable foaming agent contained was 0.1 parts by mass or more and 5 parts by mass or less per 100 parts by mass of the composite particles, and the value of the migration ratio (S_{A}/S_{B}) was 4 or more and 15 or less were excellent in suppression of heat generation in case of internal short circuit and an increase in the internal resistance was suppressed.

### INDUSTRIAL APPLICABILITY

According to the present disclosure, it is possible to provide composite particle for an electrochemical device, a production method of the same, and an electrode for an electrochemical device, which can contribute to suppression of an increase in the initial resistance of the electrochemical device and suppression of heat generation in case of internal short circuit in the electrochemical device.

In addition, according to the present disclosure, it is possible to provide an electrochemical device in which the initial resistance is suppressed and which is excellent in suppression of heat generation in case of internal short circuit.

### REFERENCE SIGNS LIST

- 1: Composite particle
- 2: Long axis
- 3: Midpoint
- 4: Cross section
- 5: Circle
- 20: Electrode for electrochemical device
- 21: Current collector
- 22: Electrode mixed material layer
- 221: Upper portion of electrode mixed material layer
- 222: Bottom portion of electrode mixed material layer

## Claims

1. A composite particle for an electrochemical device, the composite particle comprising an electrode active material, a conductive material, a thermally decomposable foaming agent, and a binder,
the thermally decomposable foaming agent being contained in an amount of 0.1 parts by mass or more and 5 parts by mass or less per 100 parts by mass of the composite particle for an electrochemical device,
when a cross section of the composite particle for an electrochemical device perpendicular to a long axis of the composite particle for an electrochemical device, and including a midpoint of the long axis is subjected to a map analysis using an electron beam microanalyzer (EPMA), a value of a ratio (S_{A}/S_{B}) of an integrated value (S_{A}) of a detection intensity of carbon atoms contained outside a range of a circle a center of which is coincides with the midpoint of the long axis and a diameter of which is one half of a length of the long axis, to an integrated value (S_{B}) of a detection intensity of carbon atoms contained within the range of the circle, is 4 or more and 15 or less.

2. The composite particle for an electrochemical device according to claim 1, wherein a volume average particle diameter of the composite particle for an electrochemical device is 30 µm or more and 150 µm or less.

3. The composite particle for an electrochemical device according to claim 1 or 2, wherein a thermal decomposition starting temperature of the thermally decomposable foaming agent is 200 °C or higher and 500 °C or lower.

4. The composite particle for an electrochemical device according to any one of claims 1 to 3, wherein the thermally decomposable foaming agent has a core-shell structure having a shell made of a surfactant.

5. The composite particle for an electrochemical device according to any one of claims 1 to 4, wherein the conductive material comprises carbon nanotubes.

6. A method of producing the composite particle for an electrochemical device according to any one of claims 1 to 5, comprising the steps of:
preparing a slurry composition for a composite particle by dispersing at least an electrode active material, a conductive material, a thermally decomposable foaming agent, and a binder into a solvent; and
granulating the slurry composition for a composite particle,
the slurry composition for a composite particle having a viscosity of 500 mPa·s or more and 1500 mPa·s or less.

7. The method of producing the composite particle for an electrochemical device according to claim 6, wherein the granulation is achieved by spray drying.

8. An electrode for an electrochemical device, the electrode comprising an electrode mixed material layer on a current collector,
the electrode mixed material layer being an aggregate of composite particles for an electrochemical device according to any one of claims 1 to 5.

9. The electrode for an electrochemical device according to claim 8, wherein
an amount of the composite particles for an electrochemical device per unit area of the current collector is 25 mg/cm² or more and 80 mg/cm² or less, and
an upper portion of the electrode mixed material layer and a bottom portion of the electrode mixed material layer yielded by cutting the electrode mixed material layer at a center thereof in a thickness direction are subjected to a map analysis using an electron beam microanalyzer (EPMA), a ratio (S1:S2) of an integrated value (S1) of a detection intensity of carbon atoms contained in the upper portion of the electrode mixed material layer, to an integrated value (S2) of a detection intensity of carbon atoms contained in the bottom portion of the electrode mixed material layer, is 60:40 to 40:60.

10. An electrochemical device comprising the electrode for an electrochemical device according to claim 8 or 9.
